# EUROPEAN PATENT APPLICATION

(11) **EP 3 099 028 A1**
(43) Date of publication of application: **30.11.2016**
(21) Application number: 16171387.0
(22) Date of filing: 25.05.2016
(51) Int. Cl.: H04L 12/917

(54) **TRAFFIC MANAGEMENT APPARATUS AND METHOD FOR TRAFFIC MANAGEMENT**

(30) Priority: 29.05.2015 CN 201510291104
(71) Applicant: Hitachi, Ltd., Tokyo 100-8280 (JP)
(72) Inventor: JIANG, Miao, 100190 Beijing (CN); GENG, Lu, 100190 Beijing (CN)
(74) Representative: MERH-IP Matias Erny Reichl Hoffmann Patentanwälte PartG mbB

(57) **Abstract**

Provided are an apparatus and method for traffic management whereby utilization efficiency of network resources can be improved. The traffic management apparatus 100 includes: an application request receiving unit 10 that receives a traffic optimization request of an application, the traffic optimization request being used to request an optimization for traffic of the application in a network; a network information obtaining unit 41, 42 that obtains network information regarding the network; an application request filtering unit 20 that filters the traffic optimization request received by the application request receiving unit according to an predetermined rule, and determines whether to retain the traffic optimization request; and a traffic optimization decision unit 30 that responds to the traffic optimization request filtered and retained by the application request filtering unit 20, and generates a traffic optimization scheme corresponding to the filtered and retained traffic optimization request using the network information.

## Description

### CLAIM OF PRIORITY

The present application claims priority from Chinese patent application CN201510291104.7 filed on May 29, 2015, the content of which is hereby incorporated by reference into this application.

### BACKGROUND

The present invention relates to an apparatus and method for traffic management used for traffic optimization in a communication network, and more particularly, to an apparatus and method for traffic management in a communication network that bears the traffic of a third party service provider.

With the continuous development of information technology, communication networks are increasingly widely utilized. A communication network refers to an existing network, including LTE (Long Term Evolution) network, 3G (3^{rd} Generation, such as WCDMA, CDMA2000) network, and the like, the network transmission of which is provided and maintained by network operators.

In a communication network where data traffic accounts for the largest proportion of business (e.g., current 3G and LTE network), a vast majority of the traffic is from Internet business providers, i.e., from businesses that are not the network operators' self-operated ones (that is to say, from businesses of third party service providers).

Take the LTE network for example; when a user needs to access the Internet or a remote server of some application via the LTE network, the network will establish a bearer for the user. The bearer connects from the user to a packet data network gateway, while several network devices, such as a base station, a serving gateway, and a packet data network gateway, are involved. Corresponding traffic is generated on the bearer.

The so-called "bearer" represents the extent to which a business is supported by a network, manifests as bearer QoS (Quality of Service) parameters, and can be classified into several types depending on the quality of the support for the business.

QoS parameters of a bearer include GBR (Guaranteed Bit Rate), QCI (QoS Class Identifier), ARP (Address Resolution Protocol), MBR (Maximum Bit Rate), AMBR (Aggregated Maximum Bit Rate, including UE-AMBR and APN-AMBR).

In the above, a GBR bearer and a Non-GBR bearer are of two different types of bearer resources. The GBR bearer guarantees that a certain amount of bandwidth is allocated to a network for traffic transmission, while the Non-GBR bearer indicates that a network transmits the traffic with "best effort", without guaranteeing sufficient bandwidth. QCI is an identification that represents a QoS level, each QCI level corresponding to a respective resource type (GBR/Non-GBR), priority, latency, packet error rate and typical businesses corresponding to such parameters. MBR is used for providing a maximum bandwidth limit for the GBR bearer. Although the GBR bearer has a certain amount of network bandwidth guarantee, a MBR is used to define an upper limit of bandwidth for the GBR bearer in order to limit an infinite occupancy of network resources by this type of bearer. AMBR is a parameter newly designed for a LTE system to limit the infinite occupancy of network resources by a group of Non-GBR. In addition, the implementation forms of an AMBR include APN (Access Point Name)-AMBR and UE (User Equipment)-AMBR.

Since 3G technology, the primary businesses types in the networks are evolved in such a way that traditional ones such as voice and messaging are being replaced by data businesses. In particular, social network applications are gradually becoming the dominant traffic generating source of the 3G network.

In addition, recent 4G networks being gradually set up in China majorly adopt LTE technology, the network speed of which is significantly increased in comparison with that of 3G technology, so that some video-uploading type applications (such as intelligent security) can be supported by network transmission, further enriching the traffic types in the network.

On the other hand, compared with the relatively low volume, high frequency data generated by a social network type application, the traffic generated by an intelligent security type application and the like has a larger data volume or shows diversity, i.e., it is possible for a video captured by a camera to be transmitted at a low resolution (corresponding to low data volume generated) in real time via mobile network to a remote surveillance center under normal circumstances, and transmitted at a high resolution (corresponding to high data volume generated) under special circumstances where the surveillance video of a certain area needs to be focused on.

Accordingly, the diversity of bearers can also be shown when such application is supported by a 4G network; that is to say, transmission is conducted with Non-GBR bearer under normal circumstances, and with GBR bearer under special circumstances. The traffic in the network can be optimized by altering the QoS parameters of the bearer according to the condition of the application.

Nevertheless, the network is "unaware" of when the application is under normal or special circumstances, because it is solely up to the application side (a user terminal, or a remote server of an application) to decide. Consequently, it seems to be more practical for the network to receive, via an interface, such information provided by the application side, whereby corresponding data traffic in the network is optimized. In this way, a more timely feedback may also be provided when the performance of the application degrades.

The traffic optimization mechanism in existing 3G networks is not completely identical to that in LTE networks. Similarly, in both technologies, however, respective bearers are established by the network according to users' subscription information and specific requirement for traffic (real-time, data rate, latency, etc.) to implement traffic delivery.

When congestion occurs in a network, as network resources are extremely limited at this time, such "best effort" delivery as that of Non-GBR bearer may suffer from considerable performance degradation, e.g. a significant increase in latency, and even disconnection, or a significant decrease in data rate, which may manifest itself as an unusually slowing down of picture/video uploading/downloading. In an existing network, such performance degradation cannot be ameliorated unless and until the congestion alleviates on its own (e.g. due to decreasing of users or transmission requirements, or due to some traffic optimization measures taken within the network).

This means, only the network side can optimize the traffic of an application by the network's own judgment, where the requirements of the application itself are often inaccurately reflected. Take e.g. the abovementioned intelligent security application as an example, about when the video traffic being uploaded by the application only needs to be bore and delivered by a Non-GBR bearer and when the traffic needs to be bore and delivered by a more guaranteed GBR bearer, the application side is required to make decision on its own and then notify the network of the decision. Based on this information, the network performs a possible traffic optimization so that the application may achieve a better result: the network bears the traffic with "best effort" under normal circumstances, and with "guarantee" under special circumstances.

According to standardized document TS23.203 (V12.7.0 (2014-12), 4.3 Policy control requirements, 5. Architecture model and reference points) from the standardization organization 3GPP, there exist technologies related to a network performing traffic optimization taking into account performance index information fed back by an application.

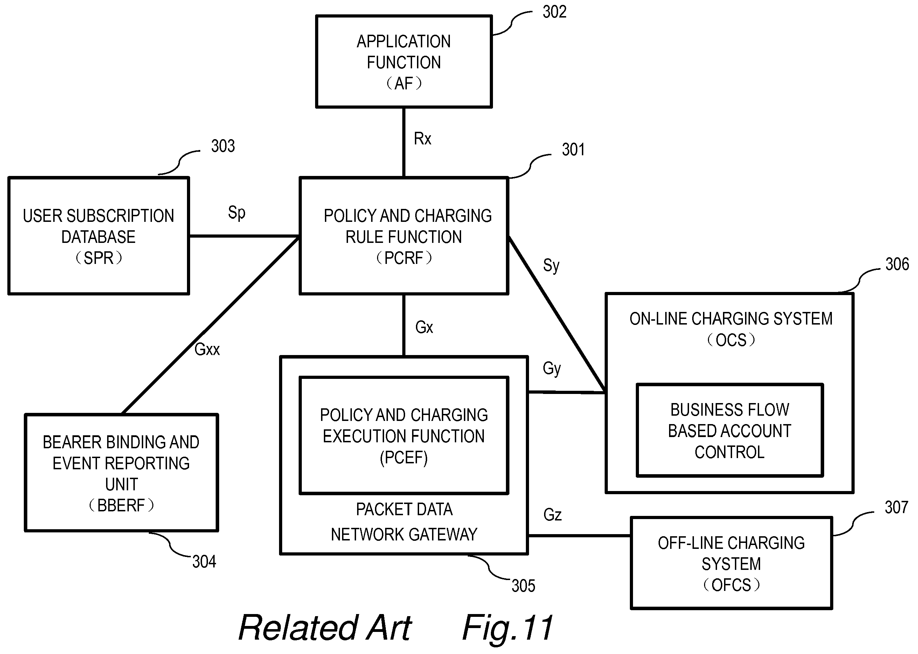

FIG. 11 is an architecture diagram of an existing Policy and Charging Control (PCC) architecture in a non-roaming state. As illustrated in FIG. 11, the architecture includes: an application function (AF) 302, a policy and charging rule function (PCRF) 301, a user subscription database 303, a bearer binding and event reporting function 304, a packet data network gateway 305 including a policy and charging execution function (PCEF), an on-line charging system 306 and an off-line charging system 307.

To design and implement the policy and charging rule function 301, it is required to synthesize the information of application function 302, user subscription database 303 and the bearer binding and event reporting function 304. In the above, the application function 302 provides the PCRF 301 with user's business information, and provides a policy and charging function on a dynamic basis. The AF 302 function entity dynamically provides the PCRF 301 with session information of the application layer, according to business negotiation with the user. The PCRF 301 develops policy and charging control policies according to the business information provided by AF 302 as well as user subscription information and local operator policies, and then issues the policy and charging control policies to the gateway 305 in the packet network, where the policies are enforced by the PCEF 305. Since the policies include stream identification information (IP quintuple) as well as QoS requirement and charging requirement for the stream, the PCEF 305 can implement a stream-based QoS and charging and implement an end-to-end QoS in the whole IP network, according to the abovementioned information. In addition, the online charging system 306 and the offline charging system 307 implement stream charging issues separately.

### SUMMARY

Currently, however, such a traffic optimizing solution based on an application's own requirement can only be implemented in the range of IP Multi-media Sub-system (IMS) of the operator's self-operated business. In other words, only the operator's self-operated business can conduct, via a defined interface, a communication with the network regarding traffic optimization, including request on traffic optimization as well as dynamic traffic policy and charging. However, the operator's self-operated business accounts for a very small proportion in an actual network. Almost all the above-mentioned newly-developing applications such as social network applications and intelligent security applications come from third party service providers.

Further, there exists a trend that the third party providers, instead of the users, pay the network operators for the charges, in order to be more advantageous in a competition with other applications of the same type. Therefore, it becomes very possible for the network operators to subscribe with the third party providers. Thus, the necessity of the traffic delivery for the third party applications to be implemented under a dynamic policy is taken into consideration.

Nevertheless, these technologies emphasis on how the network add the function of dynamic adjustment policy at the PCRF (policy and charging rule function), without concerning of how the network receives traffic optimization request information (or notification regarding performance degradation of an application) fed back by an application.

Further, the network mentioned in the prior art may dynamically adjust the traffic of a third party application, this means the network would accept whatever kind of third party applications and whatever kind of notification information regarding performance degradation, and attempt to alleviate the problem by performing a policy adjustment within the network.

In an actual network, however, numerous third party applications exist and continuously generate traffic, and the limitation of network resources is significant, especially in China. Accordingly, this is equivalent to an application performance degradation problem that frequently occurs. Under such circumstances, a real time accepting of performance improvement requests fed back by the application will consume a large amount of network resources, and inevitably waste corresponding amount of time. Further, such a consumption of resources and time will cause the requests of real-time applications that need an "as soon as possible" performance improvement to be delayed.

The present invention has been accomplished in view of the problems above, and an object of the present invention is to provide an apparatus and method for traffic management whereby utilization efficiency of network resources can be improved.

A technical solution may be a traffic management apparatus, including: an application request receiving unit that receives a traffic optimization request of an application, the traffic optimization request being used to request an optimization for traffic of the application in a network; a network information obtaining unit that obtains network information regarding the network; an application request filtering unit that filters the traffic optimization request received by the application request receiving unit according to an predetermined rule, and determines whether to retain the traffic optimization request; and/or a traffic optimization decision unit that responds to the traffic optimization request filtered and retained by the application request filtering unit, and generates a traffic optimization scheme corresponding to the filtered and retained traffic optimization request using the network information.

Another technical solution may be a traffic management method, including: an application request receiving step, at which a traffic optimization request of an application is received, the traffic optimization request being used to request an optimization for traffic of the application in a network; a network information obtaining step, at which network information regarding the network is obtained; an application request filtering step, at which the traffic optimization request received at the application request receiving step is filtered according to an predetermined rule, and whether to retain the traffic optimization request is determined; and/or a traffic optimization decision step, at which the traffic optimization request filtered and retained in the application request filtering step is responded, and a traffic optimization scheme corresponding to the filtered and retained traffic optimization request is generated using the network information.

The present invention may apply to a communication network that bears the traffic of a third party service provider. When a network receives, via a defined interface, a traffic optimization request sent from the application side, the network decides a suitable traffic optimization scheme via an indispensable request filtering unit, taking into account the current network resource state. In this way, traffic delivery of the network is better realized, advantages of the network resource are better utilized, in order to meet the requirement of the service providers, and thus the utilization efficiency of the network resource is improved.

### BRIEF DESCRIPTION OF THE DRAWINGS

FIG. 1 is a schematic diagram of a network architecture wherein a user connects via a mobile network to the Internet or a service provider.
FIG. 2 is a schematic diagram of a network architecture related to a bearer established in a LTE network.
FIG. 3 is a structural block diagram of a communication network including a traffic management apparatus relating to a first implementation.
FIG. 4 is a flowchart of an application request control of a traffic management apparatus relating to the first implementation.
FIG. 5 is a structural block diagram of a communication network including a traffic management apparatus relating to a second implementation.
FIG. 6 is a flowchart of the application request control of the traffic management apparatus relating to the second implementation.
FIG. 7 is a diagram of a message interaction of a traffic control based on a third party application traffic optimization.
FIG. 8 is another diagram of the message interaction of the traffic control based on a third party application traffic optimization.
FIG. 9 is a structural block diagram of a communication network including a traffic management apparatus relating to a third implementation.
FIG. 10 is a flowchart of the application request control of the traffic management apparatus relating to the third implementation.
FIG. 11 is an architecture diagram of existing policy and charging control in a non-roaming state.

### DETAILED DESCRIPTION

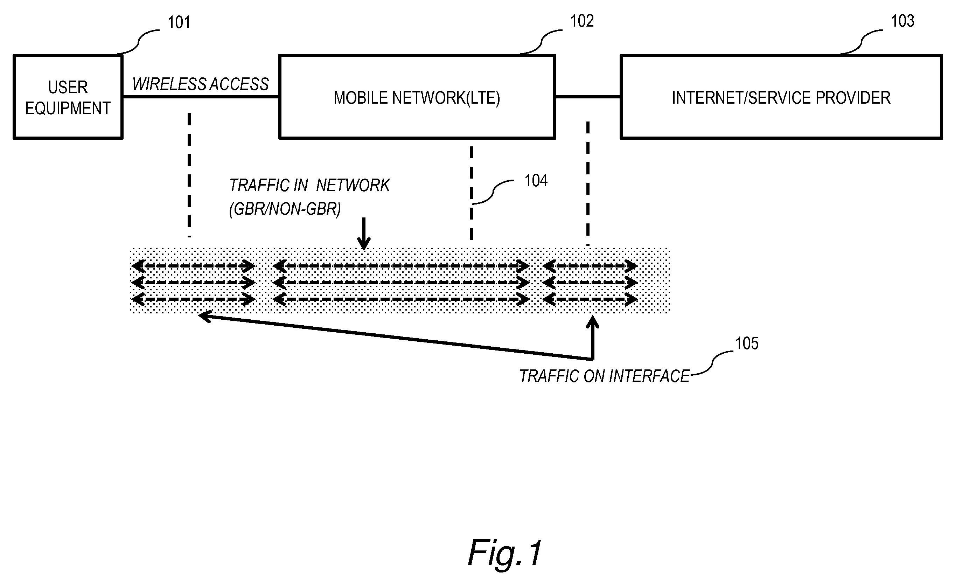

The invention applies to communication network that bears the traffic of a third party service provider. As an example applicable to the network architecture of the invention, description is made with reference to FIG. 1.

FIG. 1 is a schematic diagram of a network architecture wherein a user connects via a mobile network to the Internet or a service provider.

The mobile network 102 illustrated in FIG. 1 is, for example, the most advanced mobile network technology "Long Term Evolution (LTE)" currently being used, which is also referred to as the fourth generation communication technology or 4G technology.

When a user equipment 101 requests to connect to Internet 103 via the LTE network or to obtain service (i.e., to access the a service provider 103 to obtain information), the mobile network 102 will establish a bearer for the user equipment 101 to meet the requirement of the user, depending on the network resource condition. Upon the establishment of the respective bearer, traffic is generated in the communication network. The traffic may take the form of the traffic 104 within the network that passes through respective network nodes (such as base station, packet data network gateway) and the traffic 105 on the interfaces.

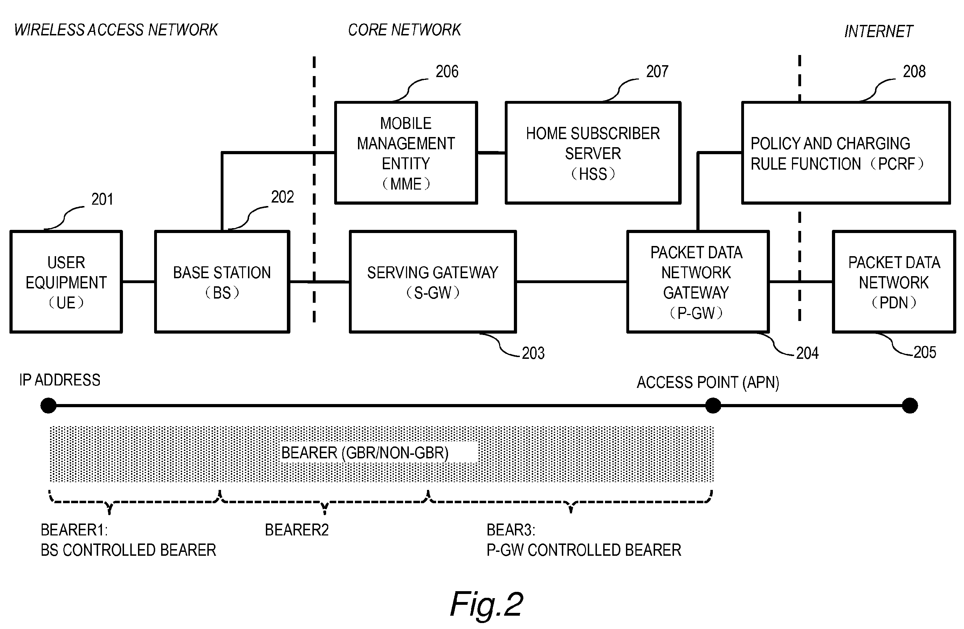

FIG. 2 is a schematic diagram of a network architecture related to a bearer established in a LTE network

In a mobile network illustrated in the FIG. 2, the transmission of traffic is implemented by establishing an end to end connection between the user equipment 201 and the packet data network 205. In particular, the QoS (Quality of Service) guarantee is implemented by an EPS (Evolved Packet System) bearer.

In the above, the established end to end connection between the user equipment 201 and the packet data network 205 is formed by wireless access network, core network, and the Internet. The primary constituting units of a mobile network include a base station 202 at the wireless access network side, and a serving gateway 203, a packet data network gateway 204, a mobile management entity 206, a home subscriber server 207, a policy and charging rule function 208 at the core network side. When there are ample resources in the network to meet the transmission requirement of the user, a corresponding bearer will be established for the user to provide suitable QoS, depending on the type of the traffic.

The EPS bearer is located between the user and the packet data network gateway, and can be divided into bearer 1 (a wireless bearer between the user and the base station, controlled by the base station), bearer 2 (the S1 bearer between the base station and the serving gateway), and bearer 3 (the S5/S8 bearer between the serving gateway and the packet data network gateway, controlled by packet data network gateway), depending on differences such as interface protocols. The transmission requirements of each bearer, such as latency and packet loss rate, are respectively guaranteed by corresponding network unit according to QoS parameters corresponding to the traffic. For the connection of a user, all the bearers (bearer 1, bearer 2, bearer 3) are determined by the policy and charging rule function (PCRF), taking into account the user's information stored in a mobile management entity (MME).

The traffic management apparatus of the present invention can be provided in various network devices that establish a bearer between the user equipment 201 and the packet data network 205, or be connected with existing network devices as an independent traffic management apparatus, thereby managing the traffic of the bearer established between the user equipment 201 and the packet data network 205.

Further, network devices related to a bearer in LTE network architecture are exemplified in the foregoing, the specific functions of which may make reference to the functions as prescribed in existing network standards.

Further, network types are not limited to LTE network, and may adopt any network that is capable of using the established bearer between the user equipment and the packet data network.

In other words, the traffic management apparatus of the invention may be applied to the network connected to an application provider, thereby managing the traffic in the established bearer.

In the context of the above-described network architecture, preferred embodiments of the invention will be described below in detail with reference to the drawings.

Further, in respective drawings of different embodiments, the same numerals are assigned to the same or like parts, and redundant parts are properly omitted.

### (First implementation)

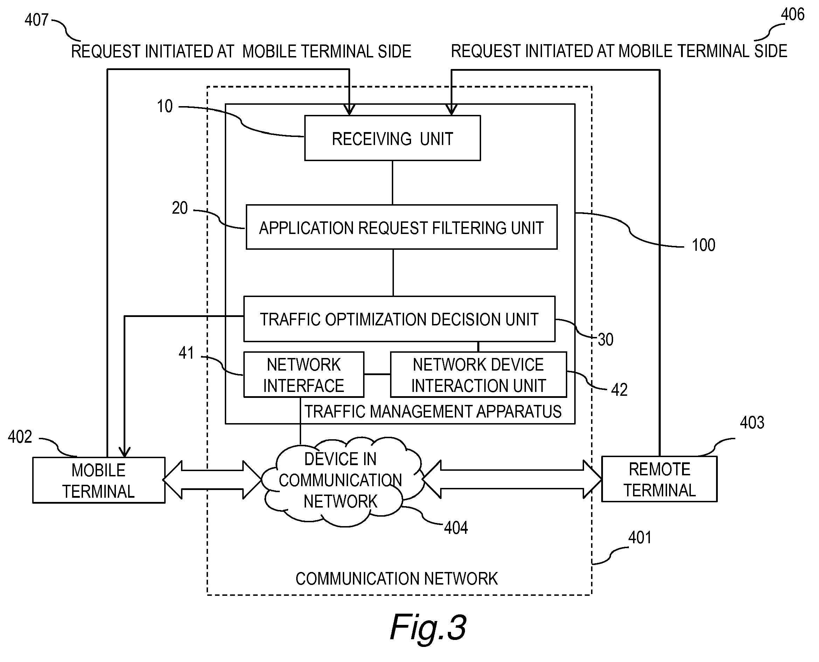

FIG. 3 is a structural block diagram of the communication network including a traffic management apparatus relating to a first implementation.

As illustrated in FIG. 3, a traffic management apparatus 100 of this implementation is provided in a communication network 401, and connected to a device 404 in the communication network via a network interface 41. The communication is assumed to be a LTE network here. The device 404 in the communication network may be any of the LTE network devices contained in FIG. 2. Specifically, it refers to any of the base station, mobile management entity, serving gateway, home subscriber server, and packet data network gateway.

In the above, the device 404 in an existing communication network is able to communicate with a mobile terminal 402 via a wireless connection, and communicate with a remote terminal 403 via a wired connection, thereby is capable of establishing a bearer between the mobile terminal 402 and the remote terminal 403.

The traffic management apparatus 100 c includes a receiving unit 10, an application request filtering unit 20, a traffic optimization decision unit 30, a network interface 41, and a network device interacting unit 42.

The receiving unit 10 receives from the terminal 402 or the remote terminal 403 a traffic optimization request of an application, the traffic optimization request is used for requesting to optimize the traffic of the application in the network. Herein, it is possible for a traffic optimization request 407 of the application to be transmitted from the terminal 402 side, and it is also possible for an optimization request 406 to be transmitted from the terminal 403 side. The receiving unit 10 is equivalent to an "application request receiving unit".

Application request filtering unit 20 filters the traffic optimization request of the application received by the receiving unit 10, and determines whether to retain the traffic request, according to a predetermined rule.

Specifically, the application request filtering unit 20 filters the traffic optimization request based on a predetermined determination rule, ignoring the traffic optimization request not complying with the requirements of the rule. The rule on which the filtering by the application request filtering unit 20 is based may include: the subscription information regarding the traffic optimization signed between the application provider and the network operator, the longest tolerable request processing time for the application, or the network operator's determination results on the possibility of the application traffic optimization.

For example, assume that the application request filtering unit 20 saves in advance the subscription information regarding traffic optimization signed by the application provider and the network operator, or receives the subscription information from outside and saves it, then the rules on which the filtering is based includes the subscription information regarding traffic optimization signed by the application provider and the network operator. In the case that the application provider and the network operator have subscribed an agreement for an application A, and the subscription information indicates that the delivery of the application A will be guaranteed with best effort even if the network is in congestion, when the remote terminal or the mobile terminal corresponding to the application A sends a traffic optimization request to the traffic management apparatus 100, the application request filtering unit 20 will filter the traffic optimization request and determine, according to the subscription information, to guarantee the traffic delivery of the application A with best effort, thereby determining the traffic optimization request for the application A as "passed", i.e., it is needed to respond to the traffic optimization request of application A and optimize the traffic of application A.

Again, for example, assume that the application request filtering unit 20 saves the network operator information in advance, such as the correspondence between the network operator and the link being used, thereby the network operator's determination of the possibility for the application's traffic optimization can be verified. Thus, the rule on which the filtering is based includes the network operator's determination of the possibility for the application's traffic optimization. The remote terminal 403 detects a performance degradation of application B, and then sends a traffic optimization request to the traffic management apparatus 100 in the case that it is determined that there is a possibility that the traffic is not reliably delivered by the transmission network. Upon the receiving unit 10 receives the traffic optimization request of application B, the application request filtering unit 20 filters the traffic optimization request, and determines, based on the network operator's determination of the possibility for the application's traffic optimization, that there is no possibility for the operator to implement the traffic optimization request as the link where the performance degradation actually occurs is not within the range of operator's network to which the application B corresponds. This is because the operator to which a traffic optimization request corresponds is not capable of implementing an optimization by altering the network configuration of other operators. Thus, the application request filtering unit 20 determines the traffic optimization as "failed", and discards the traffic optimization request. In the case that the traffic optimization is determined to be "failed", the application request filtering unit 20 may also have this condition fed back to the remote terminal 403 which is the source that sends the request.

Again for instance, assume that the application request filtering unit 20 saves in advance or receives the longest processing time that an application can tolerate, and then the rule on which the filtering is based includes the longest tolerable request processing time for the application. In the case that some real-time application C in the remote terminal or the mobile terminal detects performance degradation caused by a traffic delivery not being guaranteed, the application C will send a traffic optimization request to the traffic management apparatus 100 and notifies a longest tolerable request processing time of 3s (second). If the application request filtering unit 20 determines that the time duration of the received traffic optimization application is more than 3s, or the application request filtering unit 20 determines that the traffic optimization request cannot be processed within the longest tolerable time for the application according to the existing traffic optimization request to be processed or a delay time, then the application request filtering unit 20 determines the traffic optimization request as "failed" and discards the traffic optimization request. In the case that the traffic optimization request is determined as "failed", the application request filtering unit can also feed this condition back to the remote terminal 403 which is the source that sends the request.

Several filtering rules of the application request filtering unit 20 are respectively illustrated above, but the rules that the application request filtering unit 20 may adopt are not limited to the illustrated content, as long as they are filtering rules that may be used to filter a traffic optimization processing. The rules may be set according to specific network environments.

In addition, the rules above may be applied simultaneously or sequentially, in order to match up with the determination of the traffic optimization request.

Return to the description of FIG. 3, the traffic optimization decision unit 30 uses the network information to generate a traffic optimization scheme corresponding to the filtered and retained traffic optimization request, in response to the filtered and retained traffic optimization request by the application request filtering unit 20.

Specifically, traffic optimization decision unit 30 optimizes the traffic optimization request via a network device interaction unit 42 that connects to network devices to obtain network information. In addition, a network interface 41 connects to existing network devices to obtain the information of the devices, such as the resource usage and the resource allocation policy, and provides traffic optimization decision unit 30 with this information for the optimization decision unit 30 to make a traffic optimization determination. For example, when congestion occurs in a part of the network, the network device interaction unit 42 obtains the congestion information via the network interface 41, and obtains the traffic allocation policy of the base station, and provides the traffic optimization decision unit 30 with the abovementioned information for a traffic optimization. For example, when it is known from the network information that traffic delivery of a certain application is affected by a congestion in the network , the traffic optimization decision unit 30 will make a decision based on the specific information of the application in association with the network state information fed back by the network device interaction unit 42, specifically, such as the determination whether to optimize the traffic of the application and how much resource to be allocated to the bear corresponding to the application. In addition, the specific decision approach of the traffic optimization decision unit 30 may also adopt existing traffic optimization decision approaches; the detail thereof is not described here for simplicity.

The network interface 41 and the network device interaction unit 42 are equivalent to a "network information obtaining unit" that obtains the network information regarding the network.

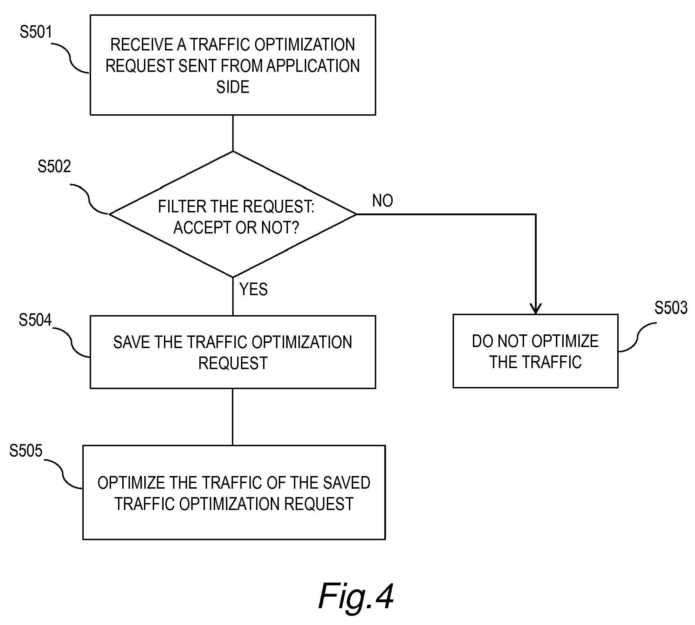

FIG. 4 is a flowchart of the application request control of the traffic management apparatus relating to the first implementation.

As illustrated in FIG. 4, at step S501, if the receiving unit 10 receives an application's traffic optimization request from the terminal 402 or the remote terminal 403, the application request unit 20 filters the traffic optimization request received and determines whether to accept the request based on a predetermined rule, such as the subscription information regarding the traffic optimization signed between the application provider and the network operator, the longest tolerable request processing time for the application, or the network operator's determination of the possibility for the application traffic optimization.

If the request is determined to be rejected at step S502 (i.e., the traffic optimization request is determined as "failed" (step S502 is a "no")), the application request filtering unit 20 will discard the traffic optimization request, and notify the remote terminal 403 that is the source which sends the request.

In the case that the request is determined to be accepted at step S502 (i.e., the traffic optimization request is determined as "passed" (step S502 is a "yes")), the application request filtering unit 20 will send the traffic optimization request to the traffic optimization decision unit 30 to be saved (step S504), and wait for the traffic optimization decision unit 30 to optimize the traffic of the corresponding application according to the request (step S505).

The management for the traffic optimization request is accomplished through the procedure above.

By filtering of the traffic optimization request, those application traffic optimization requests having a low possibility of implementation or being less efficient as they consume too much resource, are filtered out in advance. In this way, traffic optimization resource is reasonably allocated, a better traffic delivery of the network is realized, and advantages of the network resource are better utilized, and thus the utilization efficiency of the network resource is improved.

### (The second implementation)

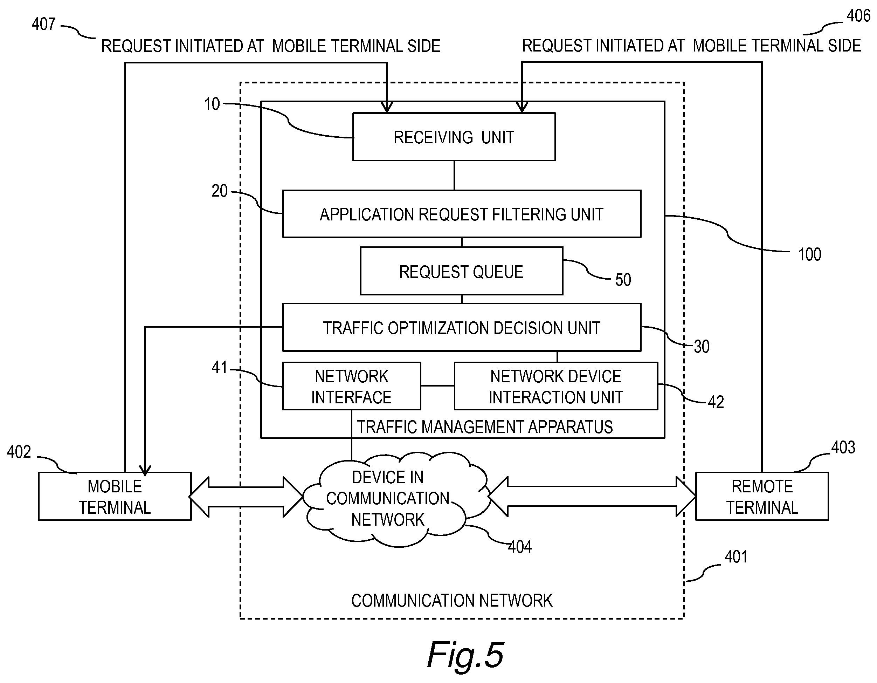

FIG. 5 is a structural block diagram of a communication network including a traffic management apparatus relating to a second implementation.

Compared with the first implementation, the second implementation differs in that it includes a request queue 50, and the rest parts thereof are the same with that of the first implementation. Accordingly, the same numerals are assigned to the same parts, and redundant parts are properly omitted.

As shown in FIG. 5, a traffic management apparatus 100 of the implementation is provided in a communication network 401, and connects to a device 404 in the network via a network interface 41. Herein, the communication network is assumed to be a LTE network. The device 404 in the communication network may be any of the LTE network devices contained in FIG. 2. Specifically, it refers to any of base station, mobile management entity, serving gateway, home subscriber server, and packet data network gateway.

In the above, the device 404 in an existing network may communicate with a mobile terminal 402 via a wireless connection, and communicate with a remote terminal 403 via a wired connection, thereby is capable of establishing a bearer between the mobile terminal 402 and the remote terminal 403.

The traffic management apparatus 100 includes a receiving unit 10, an application request filtering unit 20, a traffic optimization decision unit 30, a request queue 50, a network interface 41 and a network device interaction unit 42.

The receiving unit 10, which is equivalent to the "application request receiving unit", receives an application's traffic optimization request from the terminal 402 or the remote terminal 403.

The application request filtering unit 20 filters the application's traffic optimization request and determines whether to retain the traffic optimization request, according to a predetermined rule. In the above, the rules on which the filtering of application request filtering unit 20 is based may include: the subscription information regarding the traffic optimization signed between an application provider and a network operator, the longest tolerable request processing time for the application, or the network operator's determination of the possibility for the application's traffic optimization request, etc.

A plurality of rules based on which the application request filtering unit 20 filters may be set according to the specific network environment, as long as they are filtering criteria capable of filtering the traffic optimization process. In addition, a plurality of rules may also be applied simultaneously or in sequence, to match up with the determination for the traffic optimization request.

Further, the request queue 50 sequentially places in the queue the accepted traffic optimization requests that is filtered and accepted (determined to be "passed") by the application request filtering unit 20, and arranges them, thereby providing the plurality of requests to be processed with processing order.

In the second implementation, the request queue unit 50 arranges the traffic optimization requests in a first in first out principle, that is to say, the request received first would be processed first. Only the requests having been filtered and retained by the application request filtering unit 20 will enter the queue.

The traffic optimization unit 30 responds successively to the traffic optimization requests filtered and retained by the application request filtering unit 20 (determined to be "passed") according to the order in the request queue 50, and generate a traffic optimization scheme corresponding to the filtered and retained traffic optimization requests using the network information.

The network interface 41 and the network device interaction unit 42 are equivalent to the "network information obtaining unit" that obtains network information regarding the network.

In the second implementation, the arrangement principle of the request queue 50 is a first in first out principle, however, the order in which the traffic optimization requests are arranged is not limited to this, and may be other orders.

For example, the request queue 50 may give a priority to the request according to information attached in the traffic optimization request, putting a request of higher priority ahead to be processed first. For example, when a time-related requirement, such as a desired process time, is added in the traffic optimization request, the traffic management apparatus 100 is enabled to process the traffic optimization requests of higher timeliness applications in preference to others.

In addition, the request queue 50 may also sorts the requests according to the category of the application requesting the traffic optimization, in order to process the traffic optimization requests of more important applications in preference to others.

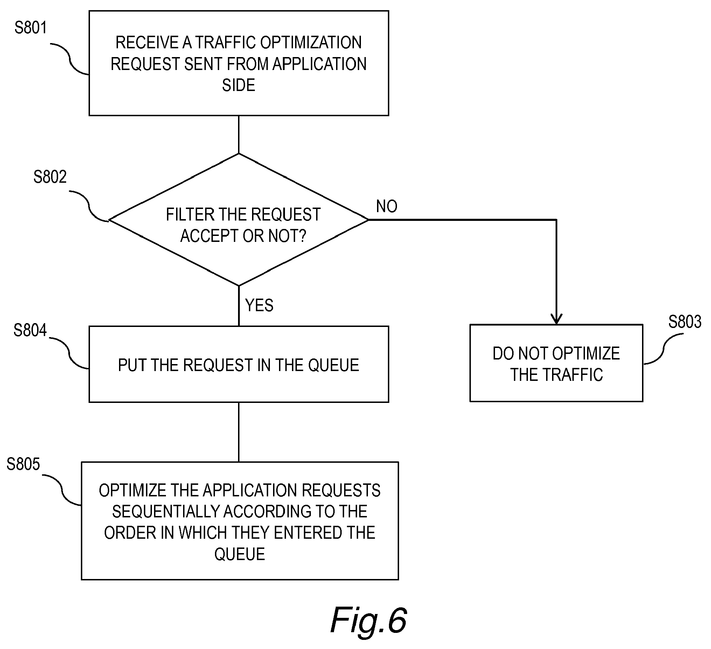

FIG. 6 is a flowchart of the application request control of the traffic management apparatus according to the second implementation.

As illustrated in FIG. 6, at step S801, if the receiving unit 10 receives an application's traffic optimization request from a terminal 402 or a remote terminal 403, the application request unit 20 filters the traffic optimization request received and determines whether to accept the request (step S802) based on a predetermined rule, such as the subscription information regarding the traffic optimization signed between the application provider and the network operator, the longest tolerable request processing time for the application, or the network operator's determination of the possibility for the application traffic optimization.

If the request is determined to be rejected at step S802 (i.e., the traffic optimization request is determined as "failed" (step S802 is "no")), the application request filtering unit 20 discards the traffic optimization request, and notifies the remote terminal 403 that is the source which sends the request.

If the request is determined to be accepted (i.e., the traffic optimization request is determined as "passed" (step S802 is "yes")), the application request filtering unit 20 sends the traffic optimization request to the request queue 50. The request queue 50 puts the traffic optimization request into the queue according to a predetermined arranging principle and waits for processing (step S804).

When a traffic optimization request is front-most in the queue, the traffic optimization decision unit optimizes the traffic of the corresponding application according to this traffic optimization request (step S805).

The management for the traffic optimization request is accomplished through the procedure above.

By filtering of the traffic optimization request, those application traffic optimization requests having a low possibility of implementation or being less efficient as they consume too much resource, can be filtered out in advance. In this way, traffic optimization resource is reasonably allocated, achieving the same effect as the first implementation. In addition, by arranging the filtered traffic optimization requests, the traffic optimization processing can be performed more effectively in a proper order, thereby further improving the utilization efficiency of the network resource.

In addition, the traffic optimization request can be initiated not only by the remote terminal, but also by the mobile terminal. The order of message interaction of the two initiation mode will be described respectively in the following.

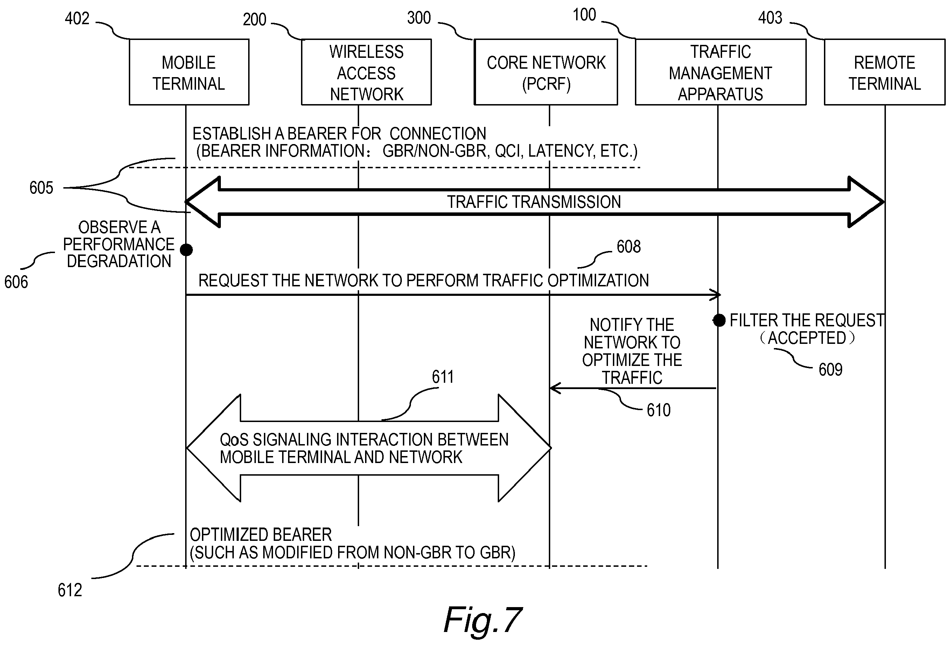

FIG. 7 is a diagram of a message interaction of a traffic control based on a third party application traffic optimization. FIG. 7 depicts the scenario where a traffic optimization request is initiated by a mobile terminal and received during filtering.

As shown in FIG. 7, when a mobile terminal 402 desires to implement some application via a mobile network, it will connect to a remote terminal 403 successively via a wireless access network 200, and a core network 300. A specific bearer connects from the mobile terminal 402 to a packet data network gateway (considered to be within the range of the core network 300), and the traffic transmission generated by the application occurs between the mobile terminal 402 and the remote terminal 403 (step S605).

Bearer information contains the bearer types of GBR and Non-GBR, QCI and the traffic delivery latency guaranteed by the corresponding network. When a mobile terminal observes a performance degradation of an application (step S606), and determines that this may be caused by network issues, the mobile terminal may send a traffic optimization request to the traffic management apparatus 100 to request the network to perform traffic optimization (step S608).

A traffic management apparatus 100 receives a traffic optimization request initiated by the application side (the two sides connected by the bearer, i.e., the mobile terminal 402 or the remote terminal 403), and filters the application request via an application request filtering unit 20, obtaining a filtering result "passed", thereby accepting the traffic optimization request (step S609). Filtered traffic optimization requests enter the request queue 50. A traffic optimization decision unit obtains a corresponding traffic optimization scheme based on this traffic optimization request. The traffic optimization scheme will carry out a traffic optimization specifically to those devices notified to the network side according to a decided scheme (step S610), and this would involve the QoS signaling interactions between the mobile terminal and the network (step S611). At step S611, the signaling interaction of the bearer is established or changed according to a traditional QoS.

Finally, an optimized bearer is obtained (step 612: change from Non-GBR to GBR, for example), thereby the traffic optimization process ends.

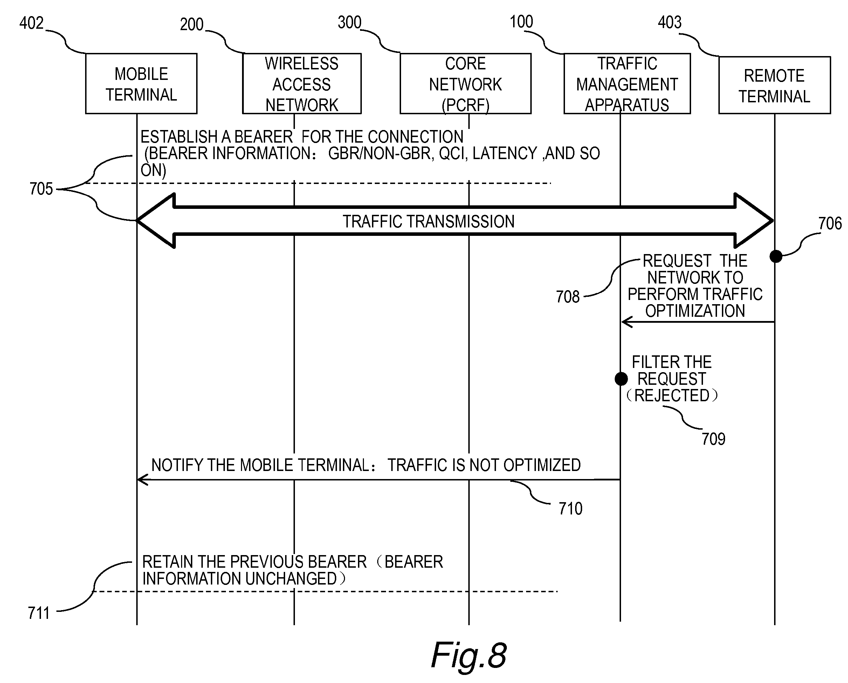

FIG. 8 is another diagram of the message interaction of the traffic control based on a third party application traffic optimization. FIG. 8 depicts a scenario where the traffic optimization is initiated by a remote terminal and discarded during filtering.

As illustrated in FIG. 8, when a mobile terminal 402 desires to implement some application via a mobile network, it connects to a remote terminal 403 successively via a wireless access network 200, and a core network 300. A specific bearer connects from the mobile terminal 402 to a packet data network gateway (considered to be within the range of the core network 300), and the traffic transmission generated by the application occurs between the mobile terminal and the remote terminal (step S705). When the remote terminal 403 observes a performance degradation of an application (step S706), and determines that this may be caused by network issues, the remote terminal may send a traffic optimization request to the traffic management apparatus 100 to request the network to optimize the traffic (step S708).

A traffic management apparatus 100 receives a traffic optimization request initiated by the application side, and filters the traffic optimization request via an application request filtering unit 20, a filtering result of "failed" is then obtained, and the traffic optimization request is discarded (step S709).

The discarded traffic optimization request will not enter the requesting queue unit 50, and will not obtain the traffic optimization scheme determined by the traffic management apparatus 100. The traffic management apparatus 100 notifies the application side (the remote terminal or the mobile terminal) of the filtering result (in step 710, it notifies the mobile terminal 402). It is up to the application side to determine if it is possible to carry out a traffic optimization on its own. Such a traffic optimization on its own may include: choosing, at the mobile terminal side, a decreased video resolution or a reduced data rate when the traffic is an uploaded video.

Finally, the previously established bearer will still be retained (step S711), and the traffic optimization process implemented by the network ends. The application side may select on its own other traffic optimization schemes not related to the network.

### (The Third implementation)

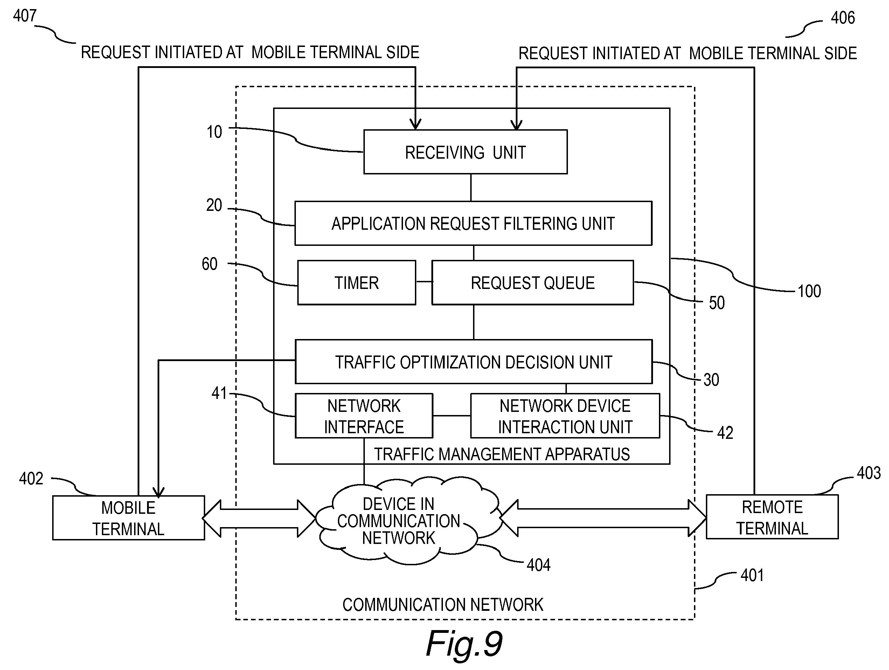

FIG. 9 is a structural block diagram of a communication network including a traffic management apparatus relating to a third implementation.

Compared with the second implementation, the third implementation differs in that it includes a timer 60, the rest parts thereof are the same with the second implementation. Thus, the same numerals are assigned to the same parts, and redundant parts are properly omitted.

As illustrated in FIG. 9, the traffic management apparatus 100 of the implementation is provided in a communication network 401, and connects to a device 404 in the network via a network interface 41. Herein, the communication network is assumed to be a LTE network. The device 404 in the communication network may be any of the LTE network devices contained in FIG. 2. Specifically, it refers to any of base station, mobile management entity, serving gateway, home subscriber server, and packet data network gateway.

In the above, the device 404 of an existing network may communicate with a mobile terminal 402 via a wireless connection, and communicate with a remote terminal 403 via a wired connection, thereby is capable of establishing a bearer between the mobile terminal 402 and the remote terminal 403.

The traffic management apparatus 100 includes a receiving unit 10, an application request filtering unit 20, a traffic optimization decision unit 30, a request queue 50, a timer 60, a network interface 41 and a network device interaction unit 42.

The receiving unit 10, which is equivalent to the "application request receiving unit", receives an application's traffic optimization request from the terminal 402 or the remote terminal 403.

The application request filtering unit 20 filters the application's traffic optimization request and determines whether to retain the traffic optimization request. In the above, the rules on which the filtering by the application request filtering unit 20 is based may include: the subscription information regarding the traffic optimization signed between an application provider and a network operator, the longest tolerable request processing time for the application side, or the network operator's determination on the possibility of the application's traffic optimization request, etc.

Further, the request queue 50 puts accepted traffic optimization requests going through the filtering of the application request filtering unit 20 in the queue in sequence and sorts them, thereby putting in order the plurality of requests to be processed in order.

The timer 60 is used to set a time. In particular, the timer 60 sets the time according to the longest tolerable request processing time contained in the application request. When it has passed the longest processing time of a traffic optimization request after receiving and filtering of the traffic optimization request, the timer 60 will notify the request queue unit 50 to query whether the traffic optimization request is contained therein. If the traffic optimization request still remains in the queue, it will be deleted and no traffic optimization will take place. The timer 60 is equivalent to a "timer unit".

For example, the longest request processing time may be contained in the traffic optimization request, in order to be obtained by extraction, or be pre-stored in the traffic management apparatus in the form of e.g. protocol information.

For example, in the case that the longest request processing time is 3s (second) and the traffic optimization request in which it is contained has passed the filtering of the application request filtering unit 20 and entered the queue, the timer 60 will start, and will search for the traffic optimization request when time ends. If the traffic optimization request still remains unprocessed in the queue, it will be discarded. This is because the traffic optimization is no longer needed as the performance of the application may have been improved along with the changes of the network congestion condition after the longest processing time is exceeded.

In addition, if the traffic optimization request does not have timeliness requirement, the timer 60 does not need to be started, or it may be omitted.

In addition, merely by way of example, the timer 60 above sets the time according to the longest processing time of the application, however, this is only one example, and the time may be set in other ways. For example, a longest processing time may be set for all the traffic optimization requests that enter the traffic management apparatus, so as to avoid the existence of traffic optimization request that has been waiting in the queue for a long time without being processed.

When the time of the timer 60 has not expired, The traffic optimization unit 30 responds successively to the traffic optimization requests filtered and retained by the application request filtering unit 20 (determined to be "passed") according to the arranging order in the request queue unit 50, and generates a traffic optimization scheme corresponding to the filtered and retained traffic optimization requests.

The network interface 41 and the network device interaction unit 42 are equivalent to a "network information obtaining unit" that obtains network information regarding the network.

In addition, in the description above, when the time ends, the expired traffic optimization request will be searched for in the queue and will be discarded if it still remains in the queue. However, when some traffic optimization is being processed, it is also possible to determine whether the corresponding timer 60 has expired. If the timer 60 has expired, the traffic optimization will not take place and be discarded, and the process for the next traffic optimization request in the queue will be performed.

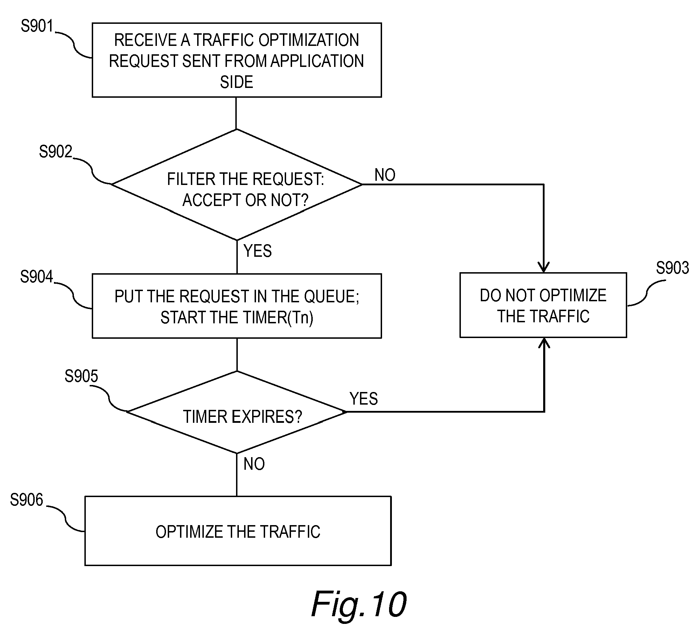

FIG. 10 is a flowchart of the application request control of the traffic management apparatus according to the third implementation.

As illustrated in FIG. 10, at step S901, if the receiving unit 10 receives an application's traffic optimization request from a terminal 402 or a remote terminal 403, the application request unit 20 and determines whether to accept the request based on a predetermined rule (step S902).

If the request is determined to be rejected at step S902 (i.e., the traffic optimization request is determined as "failed" (step S902 is "no")), the application request filtering unit 20 discards the traffic optimization request, and notifies the remote terminal 403 that is the source which sends the request.

If the request is determined to be accepted (i.e., the traffic optimization request is determined as "passed" (step S902 is "yes")), the application request filtering unit 20 sends the traffic optimization request to the request queue 50, and extracts the longest request processing time parameter contained in the traffic optimization request. The timer 60 is set (set to be Tn) and started according to this longest request processing time parameter. The request queue 50 may also put the traffic optimization request into the queue according to a predetermined arrangement rule, to wait for processing (step S904).

Subsequently, at step S905, it is determined whether the timer to which the traffic optimization to be processed in the queue corresponds has expired, or the corresponding traffic optimization request is found when the Tn has expired, the flow will proceed to step S903 and the traffic optimization determination will not be made.

For example, if the longest request processing time contained in the traffic optimization request is 3s and this request enters the queue through the application request filtering unit, then the timer 60 starts and sets Tn = 3. When the time 3s ends, if the corresponding traffic optimization still not processed, it will be discarded from the queue.

On the other hand, if it is determined that the timer to which the traffic optimization request to be processed in the queue corresponds is determined to be unexpired, or the corresponding traffic optimization request is not found in the request queue when the Tn expires (step S905 is "no"), the traffic optimization decision unit will optimize the traffic of corresponding application according to the traffic optimization request (step S906).

The management of traffic optimization request is accomplished through the procedure above.

By filtering of the traffic optimization request, those application traffic optimization requests having a low possibility of implementation or being less efficient as they consume too much resource, can be filtered out in advance. In this way, traffic optimization resource is reasonably allocated, achieving the same effect as the first and the second implementation. In addition, by setting a timer to control the processing time limit for some traffic optimization request, the utilization efficiency of the network resource can be further improved.

Some specific instances are exemplified in the following to describe how to implement the traffic management method of the invention.

### (Embodiment 1)

As the mobile network technology develops, 3G and LTE networks are already capable of supporting a higher upstream rate. In addition, China is upgrading the security field in order to achieve a better protection for public safety, and especially, the intelligent security -based applications develop fast. Also, since it has become possible to implement a security application based on a mobile network, 3G or LTE is already capable of supporting the upstream transmission of data volumes such as videos to a surveillance center through network.

In addition, some patrolling squad cars are equipped with mobile cameras. Such cameras cannot connect to a surveillance center via a wired connection, and the most possible network access is via a 3G/LTE network of a network operator, or via a WiFi. However, because a squad car always parks in areas at a warning condition that may not have a WiFi access, and typically the signal coverage of network operators are already very broad, a 3G/LTE access may be used as a primary access means by the squad cars equipped with a mobile camera. The video captured by the camera will be transmitted to a remote surveillance center. That is, a mobile camera acts as a mobile terminal, and the traffic it generates is uploaded to a remote surveillance center via a mobile network.

In embodiment 1, the description of traffic management method of the present application is set forth with reference to a security application, wherein a LTE network is utilized but a 3G network implementation is also the same.

In embodiment 1, a mobile camera, acting as a mobile terminal, continues to upload videos captured in real time to a surveillance center via a LTE network or WiFi. The process that a traffic optimization rejects an application's request is described with reference to the example of intelligent security. The selection for the network access means for the camera may be via a WiFi in some area with a WiFi already set up (such as the areas adjacent to a crowded large mall, an airport terminal), and via a LTE network in other fields without a set up WiFi. When the surveillance center finds that an important target or an abnormity is present in the frame captured by some camera, a high-resolution and smooth frame is strictly needed at that time, so that the surveillance center may determine if the police need to be dispatched and the extent of the police dispatch. If the surveillance center at the remote terminal discovers a blur or a lag is present in the video frame that the important target or abnormal events appears, the blur or lag will hinder the determination of the situation on the spot, the remote terminal determines that the occurrence of a high packet loss rate (a blur may be caused and the frame is hard to be seen clearly) or a large latency (a lag may be caused and the frame may take a long time to recover, so that the opportunity to track the important target may be lost) in the video traffic transmission may be caused by problems in the network and thereby transmitting a "traffic optimization request" to the network side. The traffic management apparatus (such as the traffic management apparatus 100 in implementations 1 to 3) at the network side will carry out a series of traffic optimization steps according to the requests received.

First, the application request filtering unit processes the traffic optimization request. The rules on which the filtering is based include whether the service provider and the network operator have subscribed on the traffic optimization, and the possibility of a traffic optimization by the operator. In this embodiment, it is assumed that the service provider of the intelligent service (typically, a police office) and the operator have subscribed on a best effort optimization for the traffic of the application.

In addition, assume that when performance degradation occurs, the connection manner of the mobile camera is WiFi connection. Then, although the service provider and the network operator have signed a subscription, the connection of the bearer does not belong to the network operated by the network operator, but to a WiFi network, then the operator that receives the traffic optimization request cannot change the configurations of a network of other operators to implement an optimization, as a result, the application request filtering unit determines to reject the traffic optimization request.

Subsequently, the traffic management apparatus notifies the mobile terminal of the result. The mobile terminal may decrease the resolution on its own in exchange for a low resolution and smooth video effect, or notify the remote terminal that the current network does not belong to the management range of the operator and there is no possibility of optimization. The application will maintain the previous bearer.

### (Embodiment 2)

In embodiment 2, the same intelligent security application as embodiment 1 is still taken as an example.

The mobile camera, acting as a mobile terminal, continues to upload videos captured in real time to a surveillance center via a LTE network. In this instance, it is assumed that the surveillance center have just found a suspect and desires to track the suspect, and expects the network to respond very quickly, otherwise, the suspect would have left the capturing area of a certain camera, consequently, a traffic optimization does not mean so much. As a result, in this embodiment, it is assumed that the traffic optimization request sent by the application carries a message "the longest tolerable request processing time is 3s", besides, the service provider (typically, a police office) and the network operator have subscribed on a best effort optimization for the traffic of the application. The traffic management apparatus on the network side will carry out a series of traffic optimization steps according to the request received

First, the application request processing unit will process the request. The rules on which it is based include whether the service provider and the network operator have subscribed on the traffic optimization, and the possibility of a traffic optimization by the operator. When the application request processing unit determines, because the service provider and the network operator have subscribed and the network being used is a LTE network (there is a possibility for traffic optimization), the application request processing unit will accept the traffic optimization request and add it into the queue.

However, assume that there are many requests in the queue. Because the request has not been processed when the timer expires, as a result, the queue will discard the request and notify application's remote terminal or mobile terminal of the determination of "not to optimize the traffic". The mobile terminal or the remote terminal may adapt to the network in a self-adaptive way such as reducing the resolution (code rate) of the video to obtain a satisfying application performance.

### (Embodiment 3)

In embodiment 3, the security is still used as the example.

The mobile camera, acting as a mobile terminal, continues to upload videos captured in real time to a surveillance center via a LTE network, and some policemen are carrying mobile video terminals (may be considered as another practical form of a mobile terminal). The policemen may access the remote surveillance center to view videos, and carry out a tracking for the suspect within a secure distance.

In this embodiment, it is assumed that a policeman have just found a suspect from the video frame of the mobile video terminal carried and wishes to track the suspect, and the policeman expects the network to respond very quickly, otherwise, the trace of the suspect will be hard to be continuously obtained by corresponding policemen and a track will become very difficult, consequently, a traffic optimization would not mean so much. As a result, in this embodiment, it is assumed that the traffic optimization request sent by the application carries a message "the longest tolerable request processing time is 3s" and the service provider (typically, the police office) and the network operator have subscribed on a best effort optimization for the traffic of the application.

In a general case of the application (wherein the policeman does not find the suspect from the video frame of the mobile terminal), the network will establish a Non-GBR (best effort) bear for this application. The bearer may have been established from the start of the connection. The quality of the video viewed by the policeman may be passable.

In a special case of the application (wherein the policeman finds the suspect from the video frame of the mobile terminal carried and desires for a track), assume that a network congestion bursts, resulting in the occurrence of a condition such as a blur or interruption that may affect the determination of the site. The mobile terminal side determines that the occurrence of a high packet loss rate (a blur may be caused and the frame is hard to be seen clearly) or a large latency (an interruption may be caused and the frame may take a long time to recover, so that the opportunity to track the important target may be lost) in the video traffic transmission may be caused by issues in the network and thereby transmitting a "traffic optimization request" to the network side.

The traffic management apparatus on the network side receives the traffic optimization request. First, the application request filtering unit determines to accept the traffic optimization according to the application's subscription information (subscribed), the possibility of an optimization (a LTE network is being used, thus optimization is possible) and the longest tolerable request processing time (3s), and thereby putting the traffic optimization request into the queue.

Assume that the request has been accepted before the timer expires. The traffic management apparatus develops a suitable traffic optimization scheme for this traffic optimization request. Specifically, the traffic optimization decision unit obtains the information of various devices in the network through the network device interaction unit. This information is further obtained from various devices in the existing network by the network interface. The traffic optimization decision unit determines to limit the rate of another unsubscribed FTP application (the bearer is also Non-GBR) according to the traffic number in the network, and information such as the types and QCI to which various traffics correspond, to spare more resources for the intelligent security application. Then the network modifies the bearer, by a necessary QoS signaling, to a GBR bearer that guarantees a rate. A video quality improvement will be observed at the mobile terminal side initiating the traffic optimization.

Or otherwise, the traffic optimization determines that there are not enough resources to be allocated to the intelligent security application according to the traffic number, and information such as the types and QCI to which various traffics correspond. However, as the network operator and the service provider have subscribed on a traffic optimization with "best effort", the network will estimate the time in which the congestion may alleviate (assumed to be 5min) after analyzing its own load, and notify the mobile terminal: "traffic is not optimized, a reduced rate is recommended, and a high resolution transmission will restore in 5min".

The second traffic optimization solution may also be viewed as the network processing a traffic optimization request of an application at the time the application receives it. And to some extent, this provides a possibility for traffic optimization (or performance enhancement). Thus, the application obtains a better traffic delivery experience.

Through the filtering of the traffic optimization requests by the application request filtering unit, a better traffic delivery of traffic of the network is realized, and the advantages of network resources is better utilized to meet the requirements of service providers.

The procedure in which the traffic optimization device processes a traffic optimization request without timeliness requirements is simpler, but still very practical. For example, some third party service providers that have subscribed with a network operator expect to optimize the traffic to the greatest extent (compared to previous instances where there is a request "wish for an immediate optimization", the requirement on timeliness is very weak, or even no timeliness requirement) within a designated time period. Take some catering reviewing applications for example, the application service provider expects the network to guarantee its traffic delivery during supper period (such as 16 to 20 o'clock) everyday, so that a user may have a better experience when using the application, and the application would be better evaluated by the user. When bad traffic delivery experience is caused by a poor network condition, the timeliness of the traffic optimization request initiated by the application side is not strong (the request at the application side is " wish the network to optimize its traffic, but can wait in the queue for process"), thus, the traffic optimization device processes the traffic optimization request would be in the procedure as shown in FIG. 6, while the function modules where a traffic optimization network device functions is shown in FIG. 5 (the timer function is not needed).

In addition, there is no difference in the message interaction process where the request is accepted or rejected from the first implementation to the third implementation.

### (Variation)

In various implementations above, the traffic management apparatus 100 may notify the requesting source or the mobile terminal or remote terminal at the application side of the result obtained from the traffic optimization request, in order for the devices at the application side to carry out other traffic optimization schemes, but the invention can be practiced without the notification of the result obtained from the traffic optimization request.

In addition, there is no particular constraint for the contact means between various devices and the network, for example, both wireless and wired connection may be used.

In addition, in various implementations above, the traffic management apparatus may act as a separate apparatus that connects to existing devices in the network to behave, but it may also be installed into some device in the network to act as a part of the network device. The traffic management apparatus may be implemented by software function modules, and may also be implemented by a circuit with corresponding functions.

Several implementations of the application have been described in the foregoing. These implementations, however, are provided as examples, and not intended to limit the scope of the invention. These novel implementations may be implemented in other manners, and various omissions, alternatives, and modifications may be carried out without departing the scope of the subject matter of the invention. These implementations and the variations thereof are encompassed within the scope and subject matter of the invention, and encompassed within the scope of the invention recited by the claims and the equivalents thereof.

## Claims

1. A traffic management apparatus comprising:
an application request receiving unit (10) that receives a traffic optimization request of an application, the traffic optimization request being used to request an optimization for traffic of the application in a network;
a network information obtaining unit (41, 42) that obtains network information regarding the network;
an application request filtering unit (20) that filters the traffic optimization request received by the application request receiving unit according to an predetermined rule, and determines whether to retain the traffic optimization request; and
a traffic optimization decision unit (30) that responds to the traffic optimization request filtered and retained by the application request filtering unit (10), and generates a traffic optimization scheme corresponding to the filtered and retained traffic optimization request using the network information.

2. The traffic management apparatus according to claim 1, further comprising a request queue unit (50) that puts the filtered and retained traffic optimization requests into a queue in sequence,
wherein the traffic optimization decision unit (30) generates corresponding traffic optimization schemes according to the sequence in which the traffic optimization requests are arranged in the request queue unit (50).

3. The traffic management apparatus according to claim 2, further comprising a timer unit that sets a time,
wherein the request queue unit (50) discards an expired traffic optimization request in the request queue according to the time set by a timer unit (60).

4. The traffic management apparatus according to claim 1,
wherein the predetermined rule includes traffic optimization subscription information between an provider of the application and a network operator, a longest tolerable traffic optimization request processing time at a side of the application, or determination results of the network operator on possibility of application traffic optimization.

5. The traffic management apparatus according to claim 2,
wherein the request queue unit (50) arranges the traffic optimization requests in sequence in a first in first out manner.

6. The traffic management apparatus according to claim 3,
wherein the timer unit (60) sets the time according to a longest request processing time contained in the traffic optimization request, and
wherein, in a case where the time expires, the request queue unit (50) determines whether an expired traffic optimization request is contained in the queue, and discards the expired traffic optimization request if it is contained in the queue.

7. The traffic management apparatus according to claim 1,
wherein the network information includes resource occupation information and a resource allocation policy of a constituent device of the network, and
wherein the traffic optimization decision unit (30) generates the traffic optimization scheme corresponding to the filtered and retained traffic optimization request, according to the resource occupation information and the resource allocation policy.

8. A traffic management method comprising:
an application request receiving step, at which a traffic optimization request of an application is received, the traffic optimization request being used to request an optimization for traffic of the application in a network;
a network information obtaining step, at which network information regarding the network is obtained;
an application request filtering step, at which the traffic optimization request received at the application request receiving step is filtered according to an predetermined rule, and whether to retain the traffic optimization request is determined; and
a traffic optimization decision step, at which the traffic optimization request filtered and retained at the application request filtering step is responded, and a traffic optimization scheme corresponding to the filtered and retained traffic optimization request is generated using the network information.

9. The traffic management method according to claim 8, further comprising an arrangement step, at which the filtered and retained traffic optimization requests are put into a queue in sequence,
wherein, at the traffic optimization decision step, corresponding traffic optimization schemes are generated according to the sequence at which the traffic optimization requests are arranged at the arrangement step.

10. The traffic management method according to claim 9,
wherein, at the arrangement step, an expired traffic optimization request in the request queue is discarded according to a time set in a timer.

11. The traffic management method according to claim 8,
wherein the predetermined rule includes traffic optimization subscription information between an provider of the application and a network operator, a longest tolerable traffic optimization request processing time at a side of the application, or determination results of the network operator on possibility of application traffic optimization.

12. The traffic management method according to claim 9,
wherein, at the arrangement step, the traffic optimization requests in sequence are arranged in a first in first out manner.

13. The traffic management method according to claim 10, further comprising a setting step, at which the time in the timer is set according to a longest request processing time contained in the traffic optimization request,
wherein, at the arrangement step, in a case where the time expires, whether an expired traffic optimization request is contained in the queue is determined, and the expired traffic optimization request is discarded if the expired traffic optimization request is contained in the queue.

14. The traffic management method according to claim 8,
wherein the network information includes resource occupation information and a resource allocation policy of a constituent device of the network, and
wherein, at the traffic optimization decision step, the traffic optimization scheme corresponding to the filtered and retained traffic optimization request is generated according to the resource occupation information and the resource allocation policy.
